(19) Europäisches Patentamt
European Patent Office
Office européen des brevets

(11) **EP 3 578 366 A1**

(12) **EUROPEAN PATENT APPLICATION**
published in accordance with Art. 153(4) EPC

(43) Date of publication:
**11.12.2019 Bulletin 2019/50**

(51) Int Cl.:
***B41J 1/00*** *(2006.01)*          ***B60R 13/04*** *(2006.01)*
***B29C 45/00*** *(2006.01)*

(21) Application number: **18717968.4**

(22) Date of filing: **02.02.2018**

(86) International application number:
**PCT/ES2018/070081**

(87) International publication number:
**WO 2018/142012 (09.08.2018 Gazette 2018/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **06.02.2017 ES 201730130**

(71) Applicant: **Maier, S. Coop.**
**48300 Ajangiz - Bizkaia (ES)**

(72) Inventor: **GABIKAETXEBARRIA MARCOS, Iker**
**48014 Bilbao (ES)**

(74) Representative: **Cueto, Sénida**
**SP3 Patents S.L.**
**Los Madroños, 23**
**28891 Velilla de San Antonio (ES)**

(54) **PROCEDURE FOR MANUFACTURING A VEHICLE TRIM WITH A PRINTED DECORATIVE PART, TRIM WITH PRINTED DECORATIVE PART AND SYSTEM TO CARRY OUT THE PROCEDURE**

(57)     Trim (1), system and procedure for manufacturing a trim (1) for a vehicle. The trim (1) comprises a thermoplastic structural part (2) with a non-flat exterior face (3) which comprises a plurality of surfaces (3a, 3b). The procedure is characterised by the application of a coating on all of the surfaces (3a, 3b). The coating is applied via inkjet printing by at least one print head (12). During printing, the structural part (2) moves longitudinally with respect to the fixed print head (12) with a three-dimensional curvilinear movement. The trim (1) obtained via the procedure has a high gloss finish, and scratch and abrasion resistance in accordance with today's demands of the automotive sector.

FIG.5

EP 3 578 366 A1

## Description

## Technical field

The invention relates to a procedure for manufacturing a trim component for a vehicle, the trim comprising a decorative part obtained by inkjet printing. The invention also relates to a system to carry out the procedure and a trim with a printed decorative part.

## State of the art

In the automotive sector, components called trims, whose main function is to provide an aesthetic finish to a certain area of the vehicle, are known in the prior art. These trims may also implement certain additional functions which are not purely aesthetic. In particular, some trims installed in the door frame of the vehicle may be provided with a structural part and a decorative part, each of which is made out of a different material, such as, for example two thermoplastic materials suitable for the function of each part. The structural part acts as a mechanical support and may integrate additional functional elements, such as, for example, elements to secure the trim to the vehicle's bodywork and/or guiding elements for the door window. The decorative part is intended to hide the structural part, whereby it is visible from the exterior when the trim is installed on the vehicle. This decorative part provides an aesthetics that is attractive and in harmony with areas of the vehicle adjacent to the trim.

Nowadays, there is a growing interest in trims particularly with a high gloss finish. This type of glossy finish has a considerable impact on the aesthetics of the vehicle due to the fact that the similarity between the brightness of the trim and the glazing of the vehicle's window improves the integration of the trim in a visually attractive way. The finish of the decorative part of the trim must also include a protective function regarding scratch and abrasion resistance.

A solution to obtain a trim with a high gloss finish and scratch and abrasion resistance, known in the prior art, consists in applying a coating to the trim by means of a subsequent painting of the shaped trim. In other words, the decorative part of these trims is made up of a layer of paint applied on a thermoplastic structural part, previously moulded by injection. The painting process can be carried out using conventional techniques, such as, for example, spray painting in paint booths. A paint booth is an isolated and conditioned space, designed to allow a surface to be painted with a high quality finish and under conditions that comply with prevailing environmental and safety regulations. To do so, booths are usually fitted with mechanisms, such as filters or water curtains, intended to eliminate contaminating particles and traces of paint that cannot be used and which does not adhere to the surface to be painted. Therefore, this type of facilities usually requires significant economic investment and its performance is not optimal.

A common solution to provide the trim with a high gloss finish, without requiring a conventional painting process, consists in making the decorative part out of a thermoplastic material that is capable of providing such glossy finish, such as, for example Polymethylmethacrylate (PMMA). Different methods for the manufacture of trims with PMMA decorative parts are known in the prior art. One possible method, known as bi-material injection, consists in injection moulding the PMMA decorative part over the structural part of the trim. The structural part is moulded with another thermoplastic material that is chemically compatible with PMMA such as, for example Acrylonitrile-Butadiene-Styrene (ABS). Another traditional alternative, for the manufacture of structural and decorative parts of this type of trims, consists in injection moulding the two parts independently and then proceeding to the assembly or connection of both parts to form the trim. Examples of trims, with a PMMA finish and produced in accordance with the aforementioned procedures, are described in the patent application MX2009004266A and in the patent ES2313471T3. Regardless of the specific method, these solutions to manufacture trims with a PMMA decorative part have the disadvantage of requiring several moulds and/or complex bi-material moulds, therefore the required facilities are usually expensive and difficult to handle. Another important limitation of the PMMA finish is that it provides insufficient scratch resistance under certain conditions.

In the prior art, it is known the industrial inkjet printing technology (also known as inkjet). Inkjet printing is based on the controlled ejection of small drops of a certain liquid or fluid, through one or various print heads fitted with several injectors. The drops adhere to the surface of an object or substrate. This technology can be used with diverse types of inks, varnishes or other fluids, with different viscosities and on a variety of different substrates, mainly in the field of decorative printing although also in the field of functional printing. In particular, some applications that use the inkjet printing technique to apply a coating on a preformed flat plastic substrate are known in the prior art.

An example of the application of a coating by means of inkjet printing is described in the patent ES2260466T3. The patent discloses a procedure for applying a resin coating, on a transparent flat substrate by means of inkjet printing. The substrate has reduced dimensions and is intended for the manufacture of a display screen or display for a mobile phone, calculator or similar. The invention ES2260466T3 aims to overcome the drawbacks of other traditional coating techniques via immersion or flow.

Another application that is similar to the previous one is described in the patent application WO2016128418A1. The patent application describes a procedure for the application of a coating, on the surface of a preferably opaque substrate, by means of inkjet printing. This solution also aims to mitigate the problems inherent to conventional coating techniques by immersion, flow or spraying. The description of the patent application indicates that the coating is capable of providing the substrate with a finish that is resistant to abrasion and scratching, as well as a high gloss finish. To do so, a composition that is suitable for such purposes can be selected from diverse compositions known in the prior art. The WO2016128418A1 publication mentions that the substrate on which the coating is applied may be a component for a vehicle, such as, for example a trim. However, it does not explain how to resolve certain difficulties associated with the use of inkjet printing to obtain a trim with a quality finish in accordance with today's demands of the automotive sector.

The present invention proposes a procedure for manufacturing trims with a coating or decorative part produced by means of inkjet printing, with an acceptable quality at an admissible cost. The procedure makes it possible to manufacture a trim, with a high gloss finish and scratch and abrasion resistance, which is able to pass quality tests of the automotive sector.

**Brief description of the invention**

It is an object of the invention a procedure for manufacturing a trim for a vehicle. The trim comprises a structural part with an exterior face. This exterior face is made up of a plurality of surfaces intended to remain visible from the exterior when the trim is installed on the vehicle. The surfaces extend along a longitudinal direction of the trim and are continuously arranged in an X direction in accordance with the width of the trim, wherein at least one of these surfaces has at least a slight curvature. Additionally, the exterior face also has at least a slight curvature in the longitudinal direction. The procedure according to the invention is characterised in that it comprises a first step, in which the structural part is manufactured by shaping a first material, and a subsequent second step, consisting in applying a coating of a second material on all of the surfaces of the exterior face. The coating is applied using the inkjet printing technique, by means of at least one fixed print head and in such a way that the structural part makes at least one pass with respect to the print head during printing. This pass is defined as a complete longitudinal displacement of the structural part with respect to the print head, in accordance with an at least slight three-dimensional curvilinear movement which allows for obtaining a uniform coating on the exterior face.

The procedure of the invention provides the trim with a decorative part printed using the inkjet printing technology on a previously shaped or moulded structural part of the trim to form a piece in three dimensions. The printing is carried out directly on a non-flat substrate, made up of the plurality of surfaces of the exterior face, and on the whole of this non-flat substrate. Preferably, the procedure comprises the prior to printing definition of an optimised three-dimensional path adapted to the geometry of the exterior face. The combination of these characteristics with an adequate selection of the second material, as in the embodiment of the invention which will be explained in greater detail herein, provides the trim with a uniform high gloss finish and with a scratch and abrasion resistance in accordance with today's demands of the automotive sector.

Because of the use of the inkjet printing technique, it is possible to avoid using complex bi-material moulds or numerous moulds for manufacturing the decorative part, obtaining a trim with better performance compared with trims with a PMMA finish. In particular, trims are obtained with increased performance to scratching compared with conventional trims with a PMMA decorative part. Despite the good properties of this extensively used thermoplastic, the finish may be insufficient under certain conditions (for example after successive wash cycles of the vehicle). Obtaining a finish with a good scratch resistance is also of great importance due to the new functions implemented in the trims (such as antennas or electronic security locks), which involve an increasing degree of handling of these components by the user of the vehicle.

The use of the inkjet printing technique also implies a better use of the coating material, in relation to conventional painting techniques, in such a way that the performance of the production process is increased. In the painting processes, the transfer rate is defined as a percentage of paint that is deposited on the treated piece in relation to the total amount of paint applied by the treatment. It is estimated that in conventional painting processes via spraying in paint booths, a typical transfer rate may be around 20%, wherein the remaining percentage of paint is spread around the paint booth without the possibility of reusing it. In other words, there is a considerable loss of material that cannot be reused. The inkjet printing is a very precise technique which allows appropriate control of the area on which the printed material is applied, whereby high transfer rates of around 95% can be achieved. On the other hand, the use of this printing technique also involves a reduction in facilities investment, compared with conventional painting techniques, such as the aforementioned spraying technique or compared with other coating techniques, such as coating by curtain or flow. These advantages represent important cost savings. Thanks to this reduction in costs, the procedure of the invention enables exploring other commercially viable options in relation to the possibility of using more expensive paints or varnishes with better properties, while keeping the production of the trim within affordable margins.

The invention is also related to a system for the implementation of the procedure and it is also related to a trim for a vehicle with a decorative part made up of a surface coating applied by means of inkjet printing.

## Brief description of drawings

The details of the invention are shown in the following figures, which do not intend to limit the scope of the invention:

- Figure 1 shows a front view of an embodiment of a trim manufactured following the procedure according to the invention.
- Figure 2 shows a rear view of the trim of Figure 1.
- Figure 3 shows a profile view of the trim of Figure 1, in which the longitudinal curvature of the trim can be appreciated.
- Figure 4 shows a view of the trim according to the AA section of Figure 1, in which the curvature changes along the width of the trim can be appreciated.
- Figure 5 shows a schematic view of a possible way of implementing the passes of the structural part with respect to the print head.
- Figure 6 shows a schematic section view of the embodiment of Figure 5.
- Figure 7 shows a block diagram of the components of an embodiment of a system suitable for carrying out the invention procedure.

## Detailed description of the invention

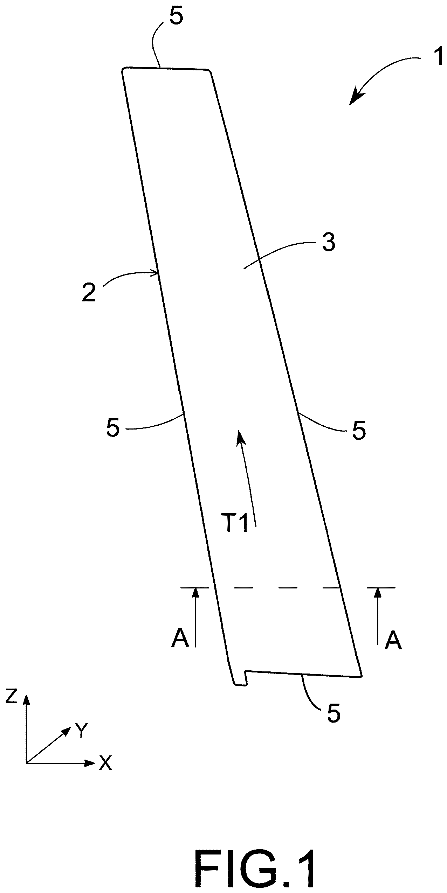

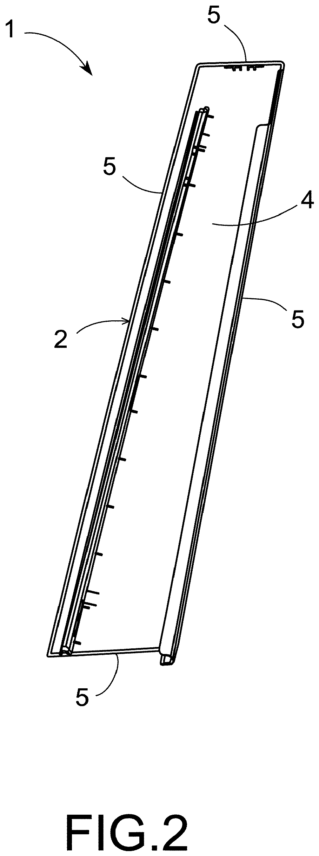

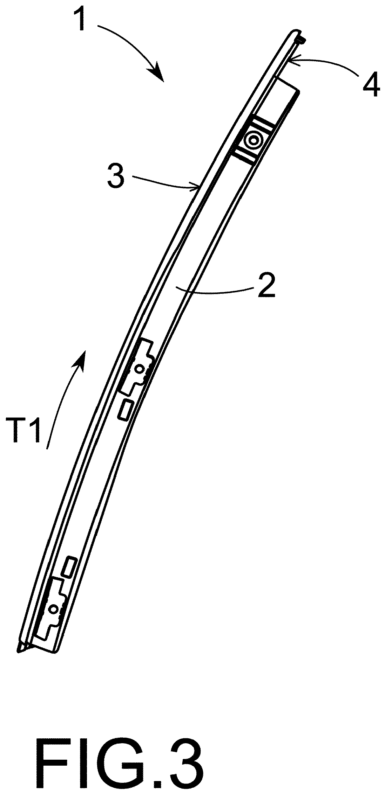

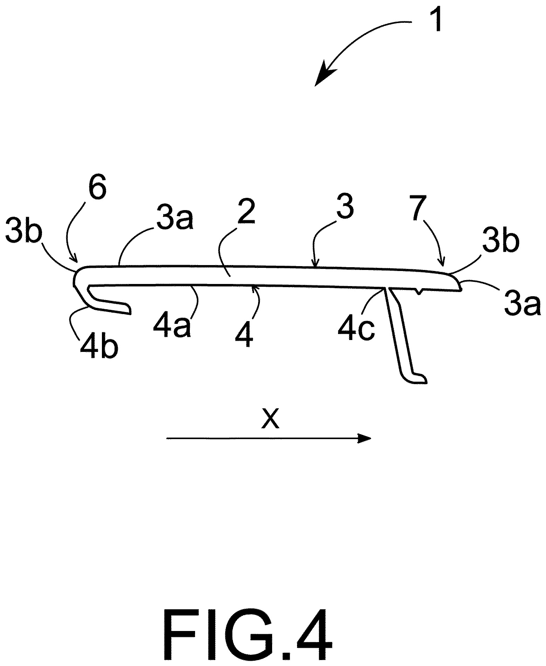

The invention is related to a procedure for manufacturing trims for vehicles, for example, trims like those installed on the exterior of a vehicle to provide the vehicle with an aesthetically attractive finish. Figure 1 shows a front view of an embodiment for a trim or, more precisely, a pillar trim for the door frame of a vehicle, manufactured following the invention procedure. The figure shows the trim (1) in a vertical position as it is found when installed on the door frame of the vehicle. Figure 2 shows a rear view of the trim (1) of Figure 1. As shown in figures, the trim (1) comprises a structural part (2) with a main surface or exterior face (3) and an interior face (4). Figure 3 shows a profile view of the trim (1) of Figures 1 and 2. As shown in Figure 3, the trim (1) is not flat along its longitudinal dimension but has a slight longitudinal curvature. Figure 4 shows a sectional view of the trim (1) in accordance with the AA cut marked in Figure 1. As shown in Figure 4, the exterior face (3) is made up of a plurality of adjacent portions or surfaces (3a, 3b) continuously arranged in an X direction in accordance with the width of the trim (1). These surfaces (3a, 3b) are intended to remain visible from the exterior of the vehicle when the trim (1) is installed on the vehicle in the position shown in Figure 1. The interior face (4) of the structural part (2) comprises surfaces which remain hidden from view when the trim (1) is installed on the vehicle. This interior face (4) may have a more complex geometry than the exterior face (3), being normally provided with several surfaces (4a, 4b, 4c) that may be substantially flat surfaces (4a), slightly curved surfaces (4b) or surfaces (4c) with pronounced curvatures or angles, forming protruding elements, protuberances, recesses or others. Both the exterior face (3) and the interior face (4) are delimited by a common contour (5), as illustrated in Figures 1 and 2. Despite the fact that the geometry of the exterior face (3) is simpler than that the geometry of the interior face (4), the surfaces (3a, 3b) may have a different curvature or orientation, so that the exterior face (3) is not entirely flat, comprising substantially flat surfaces (3a) and surfaces (3b) with at least one slight curvature. In the trim (1) shown in the figures, the structural part (2) has two slightly curved sides or ends (6, 7). The exterior face (3) is particularly made up of a first curved surface (3b) arranged at the left end (6) of the structural part (2), followed by a substantially flat surface (3a) located in a central position, followed by a second curved surface (3b) arranged at the right end (7) of the structural part (2) and an additional final substantially flat surface (3a) with a short length.

In other embodiments, the exterior face (3) may have a different combination of surfaces (3a, 3b), with ends (6, 7) that may have more or less pronounced angles or elbows or additional substantially flat portions. In summary, the trim (1) manufactured in accordance with the invention procedure is a three-dimensional piece, with a slightly curved geometry and an external surface with curvature changes both in the longitudinal direction of the trim (1) and as well in the width X direction of the trim (1). These curvature changes define the surface of the exterior face (3) of the structural part (2) of the trim (1).

The procedure according to the invention comprises a first step, consisting in manufacturing the structural part (2) of the trim (1), for example by means of injection moulding of a first thermoplastic material. The procedure is characterized in that it comprises a second step consisting in applying a coating of a second material, by means of inkjet printing on all of the surfaces (3a, 3b), for manufacturing a decorative part printed on the exterior face (3) of the structural part (2). The printing is carried out after the injection step of the structural part (2) and outside the injection mould. The exterior face (3) defined by the surfaces (3a, 3b) serves as a three-dimensional substrate on which the inkjet printing is carried out.

Furthermore, according to the invention procedure, the coating is applied by means of at least one fixed print head (12) in such a way that, during printing, the structural part (2) makes at least one pass with respect to the print head (12). This pass is defined as a full longitudinal displacement of the structural part (2) with respect to the print head (12), following a three-dimensional curvilinear movement that allows for a uniform finish on the exterior face (3). For that purpose, the trim (1) may optionally be connected to a movable support (13), controlled by an external drive (14), which transmits an at least slight three-dimensional curvilinear movement to the trim (1). The operation of printing system components (print head (12), movable support (13) and drive (14), not shown in Figures 1 to 4) will be described in greater detail herein.

Apparently, the geometry of the trim (1) is relatively simple. Although it is a three-dimensional piece, the exterior face (3) is devoid of protuberances or sharp protruding elements. However, the use of the inkjet printing technology to obtain a uniform surface coating on the trim (1) presents certain difficulties. This is due to the fact that the longitudinal curvature and the presence of the curved surfaces (3b) of the exterior face (3) make the printing process difficult. The fixed print head (12) has a flat surface (15) which must face a three-dimensional surface for the application of the coating on the exterior face (3). The invention procedure allows for an adaptation to the curvature changes of the exterior face (3) providing a uniform and quality finish on both the flat surfaces (3a) and on the curved surfaces (3b).

Preferably, the procedure comprises a step prior to printing which consists in defining at least one optimised three-dimensional path (T1) in accordance with the particular geometry of the trim (1). The direction of this path (T1) may present deviations with respect to the contour (5) or with respect to the longitudinal profile of the exterior face (3). Later, during printing, the structural part (2) makes a longitudinal pass in accordance with the previously calculated path (T1). The optimisation or adaptation of the path (T1) enables a confrontation between the exterior face (3) and the print head (12) so that a substantially constant distance D is maintained between them throughout the whole pass. In consequence, the portion or area of the exterior face (3) that is being printed at each moment remains substantially parallel and close to the fixed print head (12), thus minimising certain undesired effects that may negatively affect the appearance of the finish, such as, for example the orange peel effect. Substantially constant herein means a variation in the distance D, between the print head (12) and the exterior face (3) and along the longitudinal pass, no longer than a small margin variation. This distance D in millimetres, between the exterior face (3) and the print head (12), can be defined as:

$$D = d \pm \Delta d \ (mm)$$

wherein

     d = design parameter chosen for the distance, and
     $\Delta d$ = variation margin admitted for parameter d.

Printing is carried out at a distance D within a tolerance range limited by the values (d-$\Delta d$, d+$\Delta d$). This tolerance range defines a minimum distance D and a maximum distance D, so that the safety of the printing system components and the quality of the coating obtained are simultaneously guaranteed.

Preferably, the absolute value of the variation margin $\Delta d$ is lower than or equal to 1 mm. Therefore, with a parameter d chosen for the pass in accordance with path (T1) equal to 2.5 mm, the distance D between the print head (12) and the exterior face (3) will remain substantially constant within a range between 2.5 mm $\pm$ 1 mm, or in other words, between 1.5 mm and 3.5 mm throughout the whole pass.

Optionally, the parameter d is within a range between 2 mm and 4 mm, so that the distance D between the print head (12) and the exterior face (3) will be within a preferred total tolerance range between 1 mm and 5 mm.

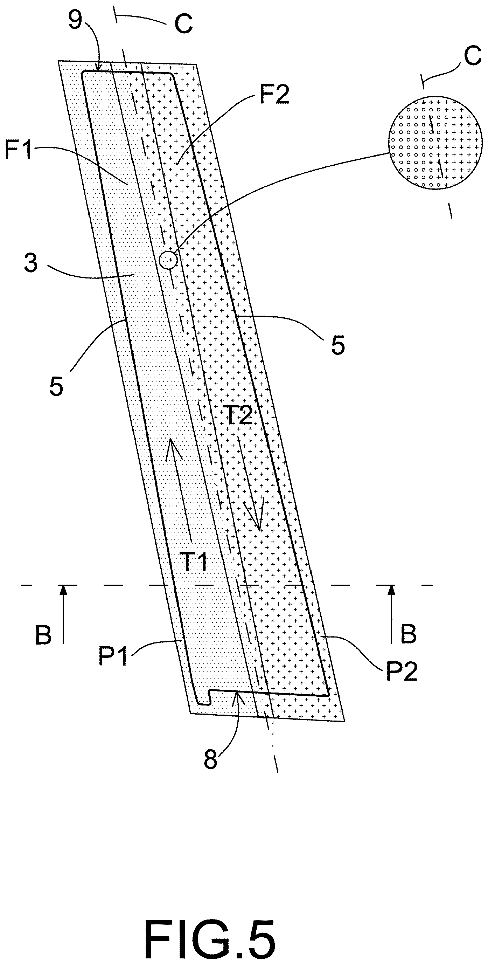

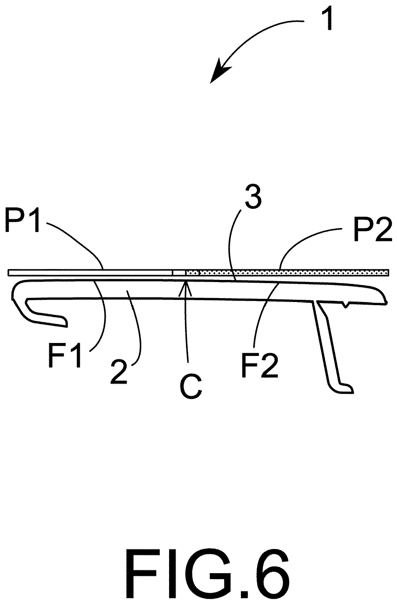

Optionally, the procedure comprises an additional step prior to printing which consists in defining at least one dividing curve (C) on the exterior face (3). This dividing curve (C) delimits two longitudinal sections or strips (F1, F2) of the exterior face (3). In the embodiment described, a single dividing curve (C) is defined that specifically delimits two strips (F1, F2) as shown schematically in Figures 5 and 6. The dividing curve (C) does not have to match a symmetry line of the exterior face (3) and does not necessarily need to be parallel to the longitudinal portions of the contour (5) of the exterior face (3). Each of these longitudinal strips (F1, F2) is delimited by the dividing curve (C) and by the contour (5) of the exterior face (3). Printing, in this case, comprises two non-simultaneous passes (P1, P2) for the application of the coating on both strips (F1, F2). Carrying out the printing in different passes allows for a better adaptation to the geometry of the exterior face (3). This embodiment of the invention has the additional advantage of allowing the exterior face (3) to be coated by means of a single print head (12) with a width shorter than the width of the trim (1). Commercial industrial printers are usually fitted with print heads with a typical width of around 65 or 70 mm. The trims may have a larger width, for example of up to 100 mm.

Also optionally, like in the embodiment of figures, two independent three-dimensional paths (T1, T2) that are specifically adapted to the geometry of each strip (F1, F2) are specifically defined prior to printing. The structural part (2) makes a first pass (P1) following the first path (T1) and then a second pass (P2) following the second path (T2), keeping the distance D between the exterior face (3) and the print head (12) substantially constant along both passes. Preferably, the direction of the path (T2) is opposite to the direction of the path (T1). Opposite direction must herein be understood in the sense that during the first pass (P1) the coating is applied on the exterior face (3) from a lower end (8) towards an upper end (9) of the structural part (2), and during the second pass (P2) the coating is applied from the upper end (9) towards the lower end (8). The choice of paths (T1, T2) in opposite directions helps to optimise the performance of the procedure.

In other embodiments different from the one shown in figures, it is possible to define an additional second dividing curve and an additional path for the coating of a third strip. In this case, a first strip between the left end (6) of the structural part (2) and the first dividing curve will be delimited, as well as a second central strip between the two dividing curves and a third strip between the second dividing curve and the right end (7). Printing, in this case, comprises three non-simultaneous passes for the application of the coating on the three strips. This embodiment is advantageous because it enables a coating to be applied on a structural part (2) when it is not possible to maintain a distance D within the tolerance range (d-Δd, d+Δd), for the whole of the exterior face (3) with only two passes, due to the geometry of the trim (1). This option allows for the coating of trims (1) with pronounced angles close to the contour (5) using the procedure according to the invention.

On the other hand, the inkjet printing heads comprise a plurality of injectors through which the system ejects the drops of fluid to apply the coating. Printing is binary, whereby each injector may or may not be active (ejecting drops) in a given pass. Optionally, in each of the passes (P1, P2) there is a percentage of active injectors and a percentage of inactive injectors. This possibility is used, for example, in areas adjacent to the dividing curve (C), as illustrated schematically by shading in Figure 5, in order to cover each strip (F1, F2) properly and make an adequate overlap of the two strips (F1, F2) along the dividing curve (C). After each pass is completed, the injectors that have remained inactive are discharged in order to avoid blockage problems.

Other embodiments of the invention in which two print heads (12) are used are also considered. The print heads (12) can be positioned in parallel in the X direction so that the two of them cover the entire width of the trim (1). In this case, the print heads (12) print simultaneously and the structural part (2) carries out a single pass for the coating of the exterior face (3). This embodiment has the advantage of allowing an increase in the production speed. In another embodiment of the invention, the two print heads (12) may be positioned in series in the longitudinal direction of the trim (1). The structural part (2) carries out two passes for the coating of the exterior face (3) and both print heads (12) print simultaneously at a faster speed compared to configurations with just one print head, also increasing the production speed in this case.

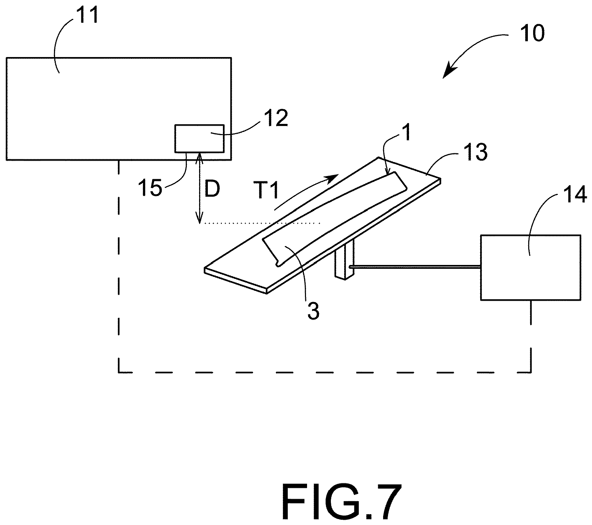

The invention is also related to a suitable system for the implementation of the procedure described. Figure 7 shows a block diagram of an embodiment of the system according to the invention. The system (10) comprises a inkjet printing unit (11), with at least one fixed print head (12) for the application of a coating on a trim (1) as shown in Figures 1 to 6. The system (10) has the particularity of comprising a movable support (13) jointly connected to the trim (1) and controlled by an external drive (14). The movable support (13) is a light grip that enables the trim (1) to be secured and positioned under the print head (12) respecting the tolerance range defined for the procedure, or in other words, keeping a distance D between the exterior face (3) and the print head (12) that is equal to a design parameter d plus an absolute value variation margin Δd lower than or equal to 1 mm.

In accordance with the embodiment previously described for the invention procedure, the structural part (2) of the trim (1) is produced via injection moulding. Once the moulding phase is complete, the trim (1) is connected to the movable support (13) and then after an optional pre-treatment phase, the drive (14) positions the movable support (13) in an initial situation under the print head (12), as schematically illustrated in Figure 7. In this initial situation, the separation between the flat surface (15) of the print head (12) and the exterior face (3) (non-flat substrate) is variable, due to the non-flat geometry of the exterior face (3). The movable support (13) moves forward and turns simultaneously, actuated by the drive (14), transmitting this three-dimensional curvilinear movement to the trim (1) based on paths, previously defined and adapted to the geometry of the exterior face (3). Control software coordinates the printing by the print head (12) and the movement of the movable support (13). In this way, it is possible to accurately control the downfall of the drops injected by the print head (12) on the exterior face (3) of the structural part (2). Maintaining a close and substantially constant distance D between the print head (12) and the exterior face (3) allows an adequate control of the downfall direction of the drops on the exterior face (3). This direction must be as straight as possible, avoiding parabolic directions of the dropping also when applying the coating on the curved surfaces (3b), which could negatively affect the appearance of the finish, leading to a component of lower quality or defective. The procedure and system according to the invention enable to solve this problem, in order to produce a quality automotive component. The mentioned problem is not critical in other applications of prior art in which the coating is applied on completely flat substrates or in those that are not subject to the quality requirements of the automotive sector.

The control software also allows for controlling the quantity and speed printing of the second material on the exterior face (3). For example, in configurations with two serial print heads (12), it is possible to control that each print head (12) ejects half of the material at dual speed, compared with configurations with just one print head (12).

Preferably, the second material used for the coating of the exterior face (3) is a transparent varnish. Optionally, like in the embodiments described in this document, the composition of the varnish includes reactive acrylates and/or modified silica. To enable the varnish to pass through the print heads (12), its viscosity or density must be lower than that of other varnishes used in conventional airbrush painting processes, due to the fact that the outlet holes used are smaller. The application of this type of varnish according to the invention procedure provides the trim (1) with a glossy finish and enough scratch and abrasion resistance to pass quality automotive tests. These protective properties are achieved without the need to apply additional coatings, for example by means of chemical processes used to add protective functions to a printed substrate, as occurs in other applications known in the prior art.

Optionally, the procedure comprises the ultraviolet curing of the printed coating for the polymerisation of the varnish, enabling the subsequent handling of the varnished areas. Regarding the subsequent curing of the varnish, varnishing via inkjet printing presents high performance and greater flexibility with respect to conventional varnishing techniques in booths. Printing minimizes a rebound effect that is typical in conventional varnishing processes. The rebound effect refers to a certain percentage of the varnish deposited on certain areas of the piece. Those areas do not require varnishing but their subsequent curing is still necessary to enable the piece to be handled. The undesired varnishing may occur in any area, particularly in areas of the trim with accessibility difficulties. Therefore, the installation of curing lamps or additional devices is usually required, as well as their proper positioning and orientation in accordance with the specific geometry of each trim and each rebound area. The layout of the lamps must be readapted again, before subsequent curing other trims with other geometries and/or different rebound areas. In summary, the installation required for the curing of a varnished trim (1) by printing is less complex, less costly and more flexible, in comparison with the installation required for the curing of a trim varnished in accordance with traditional methods.

Other embodiments of the procedure, in which different types of varnishes are used (for example translucent varnishes) or with other curing techniques (for example "hard coating" or thermal curing varnish instead of ultraviolet) are also possible. As mentioned earlier, the precision and the performance of the invention procedure involve cost savings. This leads to the chance of applying other higher performance varnishes to manufacture an affordable trim (1), provided they are suitable for inkjet printing.

The procedure optionally includes an additional pre-treatment step prior to the inkjet printing step. For example, the structural part (2) of the trim (1) may be scoured after the injection moulding of the structural part (2), in order to eliminate dirt particles present on the surfaces of the trim (1), particularly on the surfaces (3a, 3b) of the structural part (2). Another possibility is to subject the surfaces (3a, 3b) to flame treatment, corona treatment or plasma treatment prior to printing. These or other optional pre-treatments are intended to increase the adhesion of the varnish to the surfaces (3a, 3b).

The invention is also related to a trim (1) for a vehicle. The trim (1) comprises a structural part (2) with an exterior face (3). The exterior face (3) comprises a plurality adjacent surfaces (3a, 3b) intended to remain visible from the exterior of the vehicle when the trim (1) is installed on the vehicle. The surfaces (3a, 3b) extend longitudinally along the structural part (2) and are continuously arranged in the X direction, as in the embodiment of Figures 1 to 6. The exterior face (3) has a slight longitudinal curvature and at least one of these surfaces (3b) has a slight curvature in the X direction. The trim (1) has the particularity of comprising a coating of a varnish, preferably transparent, applied on the whole of the surfaces (3a, 3b) by means of inkjet printing. This printed coating or layer is the decorative part of the trim (1) which combines an aesthetic function and a protective function of the structural part (2). The trim (1) has a high gloss finish and scratch and abrasion resistance in accordance with the requirements of the automotive sector.

More specifically, the trim according to the invention has a glossy surface finish with a uniform appearance. The perception of the appearance is a visual impression of an observer. This visual impression depends on the incident lighting and on the evaluated surface. The focus of the observer evaluating the appearance of a glossy surface may focus on the image reflected by the surface or on the surface itself. The evaluation of the reflected image defines the image quality or the reflection capacity of the surface, in terms of gloss, haze (milky appearance) and distinctness of image or DOI (which quantifies the loss of definition/contrast of the reflected image caused by the scattering of the incident light on fine structures). The evaluation of the surface provides additional information about its texture or structure. In glossy surfaces, the structure is perceived by the human eye as clear and dark waves with different sizes, because the discontinuity of the structure causes the light to reflect in different directions and the light straight reflected towards the eye of the observer is perceived as a clearer area. The visibility of these textures depends on their physical size, the observing distance and the reflected image quality. The visual perception of the waves is known as the "orange peel" effect or flow or levelling defects. There are standardized measurement devices on the market, which enable an objective measure of the different appearance parameters of a glossy finish, such as, for example, the BYK MicroGloss gloss meter and the BYK WaveScan wave meter that allows to measure and control the orange peel and the DOI parameters.

Gloss is the visual perception of the amount of direct light reflected. Gloss meters refer to the amount of light reflected with reference to a black glass calibration pattern of 100 gloss units (GU). High gloss surfaces are considered to be those with a gloss value higher than 70 GU.

In relation to orange peel, the waviness of the automotive coatings usually oscillates between 0.1 mm to 30 mm wavelength. A WaveScan meter can be used to simulate the visual perception of this waviness. The device optically scans the waviness of the structure along a certain length. In order to simulate the resolution of the human eye at different distances, the measured signal is divided into frequency ranges, using several filters, generating various bands: Wa (0.1-0.3 mm), Wb (0.3 - 1 mm), Wc (1-3 mm), Wd (3-10 mm) and We (10-30 mm). A mathematical model or optical profile is obtained, which defines the structure spectrum. The optical profile represents the visibility of the waves in accordance with the wavelengths analysed and allows for determining which structure sizes are present in the coating. Furthermore, a relevant long wave LW range is defined (values of the optical profile generated by waves between 1.2 and 12 mm wavelength, visible at a long distance).

The invention procedure allows for obtaining a high gloss trim (1), with a preferred high gloss value on the exterior face (3) higher than 80 GU. Also preferably, the exterior face (3) has reduced orange peel whose optical profile, measured for example using a WaveScan device, has an LW value lower than 18. In accordance with these appearance values, the procedure provides a basic range trim (1) which fulfils the quality requirements of the automotive sector. Optionally, the LW value is lower than 15, obtaining an intermediate range trim (1). Optionally, the LW value is lower than 10 obtaining a superior range trim (1).

Optionally, the gloss of the exterior face (3) is higher than 85 GU. Fulfilment of this requirement allows for complying with the quality tests for trims adequate for the integration of new additional functions, such as, for example, antennas or security mechanisms.

Thanks to the printed coating, the procedure of the invention produces a trim (1) with enough scratch and abrasion resistance to pass the usual quality tests according to common automotive standards. Some of these tests are referred to below.

The exterior face (3) of the trim (1) has enough abrasion resistance to pass the cleaning brushes test. The test may be carried out using Elcometer 1720 equipment and complementary accessories. It is known that the paint or varnish coatings, applied on the exterior surfaces of a vehicle, may be damaged due to the successive effect of car wash brushes. The cleaning brushes test consists in subjecting the high gloss coating to the action of a rotating brush, equipped with synthetic bristles impregnated with an abrasive solution. The defect obtained is an optical dullness caused by the accumulation of scratches, comparable with the defect found in vehicles that often use washing facilities. The degradation of the tested surface is evaluated via the measurement of the loss of gloss. Optionally, the test is passed by the trim (1) with a loss of gloss on the exterior face (3) lower than or equal to 10 GU, measured at a 20° angle.

The exterior face (3) of the trim (1) also has a dry abrasion resistance in accordance with the usual requirements of the automotive sector. One test consists in rubbing the high gloss coating using a felt band that makes a back and forth movement. A total of 5,000 cycles are completed. The test may be carried out using a linear abrasion meter, such as the electronic Jarp Crockmeter. Optionally, the test is passed by the trim (1) with a loss of gloss on the exterior face (3) lower than or equal to 5 GU, measured at a 20° angle. Also optionally, the trim (1) is able to pass the abrasion test, which is carried out using the same equipment but using a Velcro band during 10,000 cycles, also obtaining a loss of gloss lower than or equal to 5 GU. This requirement is necessary for trims (1) that implement the previously mentioned additional new functions.

Furthermore, the exterior face (3) has enough scratch resistance to pass the sclerometer test. This test may be performed with an Erichsen 318 sclerometer, equipped with a tip that penetrates the tested surface and applies a gradual force that may cause scratches. Optionally, the trim (1) is able to pass the sclerometer test with the following result: no marks or visible scratches are produced with an applied force lower than 3 Newton (N) and the coating does not become detached from the exterior face (3) with an applied force lower than 20 Newton (N).

Optionally, the coating of the trim(1) is obtained by means of printing an ultraviolet curable transparent varnish whose composition includes reactive acrylates and/or modified silica. The structural part (2) is manufactured by the injection moulding of a thermoplastic material, such as Acrylonitrile-Butadiene-Styrene (ABS), Acrylonitrile-Styrene-Acrylate (ASA), Acrylonitrile-Butadiene-Styrene /Polycarbonate (ABS/PC), Polycarbonate Polybutylene Terephthalate (PC-PBT), Polymethylmethacrylate (PMMA) or Polycarbonate (PC).

The invention also relates to a vehicle that comprises or incorporates any embodiment of the trim (1) according to the invention.

Although the manufacturing procedure according to the invention has been specifically designed to obtain an exterior component of the vehicle, its use for the manufacture of interior components of the vehicle is not excluded.

## Claims

1. Procedure for manufacturing a trim (1) for a vehicle, where the trim (1) comprises a structural part (2) with an exterior face (3), comprising the exterior face (3) a plurality of adjacent surfaces (3a, 3b) intended to remain visible when the trim (1) is installed on the vehicle, wherein the surfaces (3a, 3b) extend along a longitudinal direction of the trim (1) and are continuously arranged in an X direction in accordance with the width of the trim (1), wherein at least one surface (3b) has at least one slight curvature in the X direction and the exterior face (3) has at least one slight curvature in the longitudinal direction, wherein the procedure is **characterised in that** it comprises the steps of:

   - manufacturing the structural part (2) by shaping a first material;
   - subsequently applying a coating of a second material on all the surfaces (3a, 3b), where the coating is applied using inkjet printing by means of at least one fixed print head (12) and in such a way that the structural part (2) makes at least one pass with respect to the print head (12) during printing, wherein the pass is defined as a longitudinal displacement of the structural part (2) with respect to the print head (12) in accordance with an at least slight three -dimensional curvilinear movement.

2. Procedure, according to claim 1, wherein the trim (1) is connected to a movable support (13) controlled by an external drive (14) during the printing step.

3. Procedure, according to claim 1, further comprising a step prior to printing which consists in defining at least one three-dimensional path (T1) adapted to the geometry of the exterior face (3) so that, during the subsequent printing step, the structural part (2) makes the pass in accordance with the path (T1), keeping a substantially constant distance D between the exterior face (3) and the print head (12) throughout the pass.

4. Procedure, according to claim 3, wherein the distance D is equal to a design parameter d plus a variation margin $\Delta$d lower than or equal to 1 millimetre.

5. Procedure, according to claim 4, wherein the design parameter d is within a range between 2 millimetres and 4 millimetres, so that the distance D is within a tolerance range (d-$\Delta$d, d+$\Delta$d) between 1 millimetre and 5 millimetres.

6. Procedure, according to claim 1, further comprising a step prior to printing which consist in defining at least one dividing curve (C) delimiting at least two longitudinal strips (F1, F2) of the exterior face (3) and wherein the subsequent printing step comprises at least two passes for the coating of the strips (F1, F2).

7. Procedure, according to claim 6, further comprising a second step prior to printing, which consists in defining a three-dimensional path (T1, T2) for each strip (F1, F2), wherein each path (T1, T2) is adapted to the geometry of the corresponding strip (F1, F2) so that, during the subsequent printing step, the structural part (2) makes a first pass (P1) following the first path (T1) and a second pass (P2) following the second path (T2) keeping a substantially constant distance D between the exterior face (3) and the print head (12) along both passes (P1, P2).

8. Procedure, according to claim 7, wherein a single dividing curve (C) is defined, which delimits two strips (F1, F2) and wherein two paths (T1, T2) are defined for the coating of the corresponding strips (F1, F2).

9. Procedure, according to claim 8, wherein the direction of the path (T2) is opposite to direction of the path (T1), so that the coating is applied from a lower end (8) towards an opposite upper end (9) of the structural part (2) during the first pass (P1) and the coating is applied from the upper end (9) towards the lower end (8) during the second pass (P2).

10. Procedure, according to claim 6, wherein at least one additional dividing curve and at least one additional path are defined for the coating of a third strip.

11. Procedure, according to claim 1 or 3, wherein two print heads (12) positioned in parallel in the X direction are used.

12. Procedure, according to claim 1 or 3, wherein two serial print heads (12) arranged in the longitudinal direction are used.

13. Procedure, according to any of the preceding claims, wherein the print head (12) comprises a plurality of injectors and wherein there is a percentage of active injectors and a percentage of inactive injectors in each pass.

14. Procedure, according to claim 1 or 3, wherein the second material is a transparent varnish.

15. Procedure, according to claim 14, wherein the second material is a varnish based on reactive acrylates and/or modified silica.

16. Procedure, according to claim 1 or 3, wherein the coating provides a glossy finish so that:

- the gloss of the exterior face (3) is higher than 80 GU and
- the exterior face (3) has reduced orange peel whose optical profile has a LW value lower than 18.

17. Procedure, according to claim 16, wherein the LW value is lower than 15.

18. Procedure, according to claim 16, wherein the LW value is lower than 10.

19. Procedure, according to claim 16, wherein the gloss of the exterior face (3) is higher than 85 GU.

20. Procedure, according to claim 16, wherein the coating provides a scratch and abrasion resistance so that:

- the exterior face (3) is able to pass the cleaning brushes test with a gloss loss measured at 20° lower than or equal to 10 GU,
- the exterior face (3) is able to pass the abrasion test, using a felt band during 5,000 cycles, with a gloss loss measured at 20° lower than or equal to 5 GU, and

- the exterior face (3) is able to pass the sclerometer test in such a way that no visible marks are produced with an applied force lower than 3 Newton (N) and the coating does not become detached with an applied force lower than 20 Newton (N).

21. Procedure, according to claim 20, wherein the exterior face (3) is able to pass the abrasion test, using a Velcro band during 10,000 cycles, with a gloss loss measured at 20° lower than or equal to 5 GU.

22. Procedure, according to claim 1, further comprising an additional ultraviolet curing step for the polymerisation of the second material.

23. Procedure, according to claim 1, further comprising an additional pre-treatment step prior to inkjet printing, intended to increase the adhesion of the second material to the surfaces (3a, 3b).

24. Trim (1) for a vehicle, wherein the trim (1) comprises a structural part (2) with an exterior face (3), comprising the exterior face (3) a plurality of adjacent surfaces (3a, 3b) intended to remain visible when the trim (1) is installed on the vehicle, wherein the surfaces (3a, 3b) extend along a longitudinal direction of the trim (1) and are continuously arranged in an X direction in accordance with the width of the trim (1), wherein at least one surface (3b) has at least one slight curvature in the X direction and the exterior face (3) has at least one slight curvature in the longitudinal direction, **characterised in that** it comprises a coating of a varnish applied to all of the surfaces (3a, 3b) by means of inkjet printing.

25. Trim (1), according to claim 24, wherein the coating provides a high gloss finish so that:

- the gloss of the exterior face (3) is higher than 80 GU and
- the exterior face (3) has reduced orange peel whose optical profile has an LW value lower than 18.

26. Trim (1), according to claim 25, wherein the LW value is lower than 15.

27. Trim (1), according to claim 25, wherein the LW value is lower than 10.

28. Trim (1), according to claim 25, wherein the gloss of the exterior face (3) is higher than 85 GU.

29. Trim (1), according to claim 25, wherein the coating provides a scratch and abrasion resistance so that:

- the exterior face (3) is able to pass the cleaning brushes test with a gloss loss measured at 20° lower than or equal to 10 GU,
- the exterior face (3) is able to pass the abrasion test, using a felt band during 5,000 cycles, with a gloss loss measured at 20° lower than or equal to 5 GU and
- the exterior face (3) is able to pass the sclerometer test in such a way that no visible marks are produced with an applied force lower than 3 Newton (N) and the coating does not become detached with an applied force lower than 20 Newton (N).

30. Trim (1), according to claim 29, wherein the exterior face (3) is able to pass the abrasion test, using a Velcro band during 10,000 cycles, with a gloss loss measured at 20° lower than or equal to 5 GU.

31. Trim (1), according to claim 24, wherein the varnish is an ultraviolet curable transparent varnish and its composition includes reactive acrylates and/or modified silica.

32. Trim (1), according to claim 24, wherein the structural part (2) is produced by means of the injection moulding of a thermoplastic material.

33. Trim (1), according to claim 32, wherein the structural part (2) is produced by means of the injection moulding of Acrylonitrile-Butadiene-Styrene (ABS), Acrylonitrile-Styrene-Acrylate (ASA), Acrylonitrile-Butadiene-Styrene /Polycarbonate (ABS/PC), Polycarbonate Polybutylene Terephthalate (PC-PBT), Polymethylmethacrylate (PMMA) or Polycarbonate (PC).

34. System (10) for the application of a coating on the exterior face (3) of a trim (1) for a vehicle, the exterior face (3) comprising a plurality adjacent surfaces (3a, 3b) intended to remain visible when the trim (1) is installed on the vehicle, where the surfaces (3a, 3b) extend along a longitudinal direction of the trim (1) and are continuously arranged in an X direction in accordance with the width of the trim (1), wherein at least one of these surfaces (3b) has at least one slight curvature in the X direction and the exterior face (3) has at least one slight curvature in the longitudinal direction, **characterised in that** it comprises:

- an inkjet printing unit (11) comprising at least one fixed print head (12) for the application of the coating on all the surfaces (3a, 3b) and
- a movable support (13), jointly connected to the trim (1) and controlled by an external drive (14), which enables the trim (1) to make at least one pass with respect to the print head (12), wherein the pass is defined as a longitudinal displacement of the trim (1) with respect to the print head (12) in accordance with an at least slight three -dimensional curvilinear movement.

35. System, according to claim 34, wherein the movable support (13) is a light grip that enables the trim (1) to be positioned under the print head (12), keeping a distance D between the exterior face (3) and the print head (12) equal to a design parameter d plus a variation margin $\Delta d$ lower than or equal to 1 mm, wherein the design parameter d is within a range between 2 millimetres and 4 millimetres, so that the distance D is within a tolerance range between 1 millimetre and 5 millimetres.

36. Vehicle comprising a trim (1) manufactured according to the procedure of any of the claims 1 to 23.

37. Vehicle comprising a trim (1) according to any of the claims 24 to 33.

# FIG.1

# FIG.2

# FIG.3

**FIG.4**

FIG.5

FIG.6

# FIG.7

## INTERNATIONAL SEARCH REPORT

| | International application No |
|---|---|
| | PCT/ES2018/070081 |

**A. CLASSIFICATION OF SUBJECT MATTER**

INV. B41J1/00     B60R13/04     B29C45/00
ADD.

According to International Patent Classification (IPC) or to both national classification and IPC

**B. FIELDS SEARCHED**

Minimum documentation searched (classification system followed by classification symbols)

B05D  B41J  B60R  B29C

Documentation searched other than minimum documentation to the extent that such documents are included in the fields searched

Electronic data base consulted during the international search (name of data base and, where practicable, search terms used)

EPO-Internal, WPI Data

**C. DOCUMENTS CONSIDERED TO BE RELEVANT**

| Category* | Citation of document, with indication, where appropriate, of the relevant passages | Relevant to claim No. |
|---|---|---|
| X | WO 2016/128418 A1 (THE TRUSTEES OF THE SELECTACOAT PENSION SCHEME [GB]) 18 August 2016 (2016-08-18) | 2-33,36 |
| Y | claims; figure 3; examples ----- | 1 |
| A | EP 2 184 176 A1 (XEROX CORP [US]) 12 May 2010 (2010-05-12) paragraph [0060]; claim 1 ----- | 16-19, 25-28 |
| X | WO 03/009013 A2 (HYDROPHILM LTD [GB]; HEYS JAMES BRIAN [GB]) 30 January 2003 (2003-01-30) claims ----- | 24,36,37 |
| X | US 2006/068131 A1 (HANRAHAN KEVIN [US]) 30 March 2006 (2006-03-30) claims; examples ----- | 24,36,37 |

-/--

| X | Further documents are listed in the continuation of Box C. | | X | See patent family annex. |
|---|---|---|---|---|

* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 11 July 2018 | 18/07/2018 |

| Name and mailing address of the ISA/ | Authorized officer |
|---|---|
| European Patent Office, P.B. 5818 Patentlaan 2 NL - 2280 HV Rijswijk Tel. (+31-70) 340-2040, Fax: (+31-70) 340-3016 | Slembrouck, Igor |

Form PCT/ISA/210 (second sheet) (April 2005)

**EP 3 578 366 A1**

## INTERNATIONAL SEARCH REPORT

International application No

PCT/ES2018/070081

| C(Continuation). DOCUMENTS CONSIDERED TO BE RELEVANT | | |
|---|---|---|
| Category* | Citation of document, with indication, where appropriate, of the relevant passages | Relevant to claim No. |
| X | JP 2014 012240 A (TRINITY IND CO LTD) 23 January 2014 (2014-01-23) | 34,35,37 |
| Y | abstract; figure 6 ----- | 1 |
| X | US 2009/167817 A1 (ORR CRAIG [US]) 2 July 2009 (2009-07-02) claim 1; figures ----- | 34,35,37 |
| X | JP 2016 068050 A (TRINITY IND CO LTD) 9 May 2016 (2016-05-09) abstract; figures ----- | 34,35,37 |
| X | JP 2015 196106 A (SHIBAURA MECHATRONICS CORP) 9 November 2015 (2015-11-09) abstract; figures ----- | 34,35,37 |
| X | EP 2 196 267 A2 (REHAU AG & CO [DE]) 16 June 2010 (2010-06-16) claims; figures; examples ----- | 34,35,37 |

Form PCT/ISA/210 (continuation of second sheet) (April 2005)

## INTERNATIONAL SEARCH REPORT
Information on patent family members

International application No

PCT/ES2018/070081

| Patent document cited in search report | | Publication date | Patent family member(s) | | | Publication date |
|---|---|---|---|---|---|---|
| WO 2016128418 | A1 | 18-08-2016 | CN | 107257714 | A | 17-10-2017 |
| | | | EP | 3229975 | A1 | 18-10-2017 |
| | | | JP | 2018510760 | A | 19-04-2018 |
| | | | WO | 2016128418 | A1 | 18-08-2016 |
| EP 2184176 | A1 | 12-05-2010 | CN | 101722755 | A | 09-06-2010 |
| | | | EP | 2184176 | A1 | 12-05-2010 |
| | | | JP | 5727698 | B2 | 03-06-2015 |
| | | | JP | 2010106275 | A | 13-05-2010 |
| | | | KR | 20100049490 | A | 12-05-2010 |
| | | | US | 2010112232 | A1 | 06-05-2010 |
| WO 03009013 | A2 | 30-01-2003 | AT | 320612 | T | 15-04-2006 |
| | | | AU | 2002313530 | A1 | 03-03-2003 |
| | | | CN | 1533510 | A | 29-09-2004 |
| | | | DE | 60209914 | T2 | 14-12-2006 |
| | | | DK | 1410075 | T3 | 24-07-2006 |
| | | | EP | 1410075 | A2 | 21-04-2004 |
| | | | ES | 2260466 | T3 | 01-11-2006 |
| | | | HK | 1069210 | A1 | 08-09-2006 |
| | | | JP | 2004536338 | A | 02-12-2004 |
| | | | PT | 1410075 | E | 31-08-2006 |
| | | | US | 2004191414 | A1 | 30-09-2004 |
| | | | US | 2010075721 | A1 | 25-03-2010 |
| | | | WO | 03009013 | A2 | 30-01-2003 |
| US 2006068131 | A1 | 30-03-2006 | CA | 2581040 | A1 | 06-04-2006 |
| | | | CN | 101022948 | A | 22-08-2007 |
| | | | EP | 1827812 | A2 | 05-09-2007 |
| | | | JP | 5031571 | B2 | 19-09-2012 |
| | | | JP | 2008514403 | A | 08-05-2008 |
| | | | KR | 20070072496 | A | 04-07-2007 |
| | | | US | 2006068131 | A1 | 30-03-2006 |
| | | | WO | 2006036409 | A2 | 06-04-2006 |
| JP 2014012240 | A | 23-01-2014 | JP | 5781473 | B2 | 24-09-2015 |
| | | | JP | 2014012240 | A | 23-01-2014 |
| US 2009167817 | A1 | 02-07-2009 | CN | 101939171 | A | 05-01-2011 |
| | | | CN | 103909743 | A | 09-07-2014 |
| | | | EP | 2229282 | A1 | 22-09-2010 |
| | | | JP | 2011514234 | A | 06-05-2011 |
| | | | JP | 2014111307 | A | 19-06-2014 |
| | | | KR | 20100098552 | A | 07-09-2010 |
| | | | US | 2009167817 | A1 | 02-07-2009 |
| | | | US | 2012200626 | A1 | 09-08-2012 |
| | | | US | 2013314460 | A1 | 28-11-2013 |
| | | | WO | 2009088864 | A1 | 16-07-2009 |
| JP 2016068050 | A | 09-05-2016 | NONE | | | |
| JP 2015196106 | A | 09-11-2015 | JP | 6243278 | B2 | 06-12-2017 |
| | | | JP | 2015196106 | A | 09-11-2015 |
| EP 2196267 | A2 | 16-06-2010 | DE | 102008061203 | A1 | 10-06-2010 |
| | | | EP | 2196267 | A2 | 16-06-2010 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- MX 2009004266 A
- ES 2313471 T3
- ES 2260466 T3
- WO 2016128418 A1